# EUROPEAN PATENT APPLICATION

(11) **EP 4 494 818 A1**
(43) Date of publication of application: **22.01.2025**
(21) Application number: 23770179.2
(22) Date of filing: 09.02.2023
(51) Int. Cl.: B25J 9/22

(54) **DEVICE FOR TEACHING ROBOT, METHOD FOR TEACHING ROBOT, AND PROGRAM FOR TEACHING ROBOT**

(30) Priority: 15.03.2022 JP 2022040013
(71) Applicant: OMRON Corporation, Kyoto 600-8530 (JP)
(72) Inventor: IWAMURA, Shintaro, Kyoto-shi, Kyoto 600-8530 (JP); HASEGAWA, Naoto, Kyoto-shi, Kyoto 600-8530 (JP)
(74) Representative: Mewburn Ellis LLP
(86) International application number: PCT/JP2023/004324
(87) International publication number: WO 2023/176218

(57) **Abstract**

Robot teaching data is corrected based on a deviation between a position of each object in a 3D space and a position of each object in a real space. A device (100) for teaching a robot (130) includes a teaching point generation unit for generating a teaching point for the robot (130) in the 3D space, a landmark recognition unit for recognizing a landmark (120) placed in each of the 3D space and the real space, a difference extraction unit that extracts a difference between a position and an orientation of a workpiece (150) in the 3D space and a position and an orientation of the workpiece (150) in the real space based on a position and an orientation of the landmark (120) placed in the 3D space and a position and an orientation of the landmark (120) placed in the real space.

## Description

### Teaching Robot

### TECHNICAL FIELD

The present disclosure relates to a technique for teaching a robot, and more particularly, to correction of robot teaching data.

### BACKGROUND ART

Various robots may be used in, for example, a product manufacturing line or a product inspection line (hereinafter referred to as "line") in factories. In use of a robot in the line, the user needs to teach the robot in advance using a simulator or the like. However, the position and the orientation of each object (such as a robot, a workpiece, a base) in a three-dimensional (3D) space (in simulation) are ideal ones, and a deviation occurs between the position of each object in the 3D space and the position of each object in a real space. After constructing the line, the user thus needs to teach the robot again on site and finely adjust an operation of the robot, and such on-site adjustment becomes a burden upon the user. This leads to a need for a technique for easily correcting robot teaching data (robot operation) based on a deviation between the position of each object in the 3D space and the position of each object in the real space.

With regard to the technique of detecting a position of a workpiece in the real space, for example, Japanese Patent Laying-Open No. 2017-083234 (PTL 1) discloses a three-dimensional shape measurement device "comprising a mark search unit that calculates, using a search mark, a coordinate of a part of a surface of a measurement object including an optical cutting line formed with line laser light" (see [ABSTRACT]).

### CITATION LIST

### PATENT LITERATURE

PTL 1: Japanese Patent Laying-Open No. 2017-083234

### SUMMARY OF INVENTION

### TECHNICAL PROBLEM

According to the technique disclosed in PTL 1, the position or the like of a workpiece in the real space can be detected, but robot teaching data cannot be corrected based on a deviation between the position of each object in the 3D space and the position of each object in the real space. This leads to a need for a technique for correcting robot teaching data based on the deviation between the position of each object in the 3D space and the position of each object in the real space.

The present disclosure has been made in view of the above circumstances. An object in an aspect of the present disclosure is to provide a technique for correcting robot teaching data based on a deviation between a position of each object in a 3D space and a position of each object in a real space.

### SOLUTION TO PROBLEM

According to an embodiment, a device for teaching a robot is provided. The device includes: a teaching point generation unit for generating a teaching point for the robot in a 3D space; a landmark recognition unit for recognizing a landmark placed in each of the 3D space and a real space; a difference extraction unit that extracts a difference between a position and an orientation of a workpiece in the 3D space and a position and an orientation of the workpiece in the real space based on a position and an orientation of the landmark placed in the 3D space and a position and an orientation of the landmark placed in the real space; and a correction unit that corrects the teaching point based on the difference.

According to the present disclosure, the device can correct the teaching point based on a difference (deviation) in the position and the orientation of the workpiece between in the 3D space and in the real space. This eliminates the need for the user to manually and finely adjust the teaching point for the robot on site.

In the disclosure above, the landmark includes a plurality of landmarks. Extracting the difference between the position and the orientation of the workpiece in the 3D space and the position and the orientation of the workpiece in the real space includes selecting a nearest neighbor landmark to the workpiece from among the plurality of landmarks, and extracting the difference between the position and the orientation of the workpiece in the 3D space and the position and the orientation of the workpiece in the real space based on a position and an orientation of the nearest neighbor landmark in the 3D space and a position and an orientation of the nearest neighbor landmark in the real space.

According to the present disclosure, the device can extract a difference in the position and the orientation of the workpiece (can calculate amounts of deviation in the position and the orientation of the workpiece) based on the nearest neighbor landmark to the workpiece.

In the disclosure above, the device further includes a user interface for displaying the 3D space. The user interface displays, in the 3D space, the landmark, the workpiece, and the teaching point before correction placed in the 3D space, and the landmark, the workpiece, and the teaching point after correction detected in the real space.

According to the present disclosure, the device can visually present, to the user, a difference (deviation) in the position and the orientation of the landmark and the workpiece between in the 3D space and in the real space.

In the disclosure above, the landmark includes a plurality of landmarks. The user interface is configured to display the plurality of landmarks in the 3D space, and select a landmark used for extracting the difference in the position and the orientation of the workpiece from among the plurality of landmarks. Extracting the difference between the position and the orientation of the workpiece in the 3D space and the position and the orientation of the workpiece in the real space includes extracting a difference between the position and the orientation of the workpiece in the 3D space and the position and the orientation of the workpiece in the real space based on a position and an orientation of the selected landmark in the 3D space and a position and an orientation of the selected landmark in the real space.

According to the present disclosure, the user can select a landmark that serves as a reference for extracting the difference in the position and the orientation of the workpiece.

In the disclosure above, the robot operates according to a program including a variable for storing the teaching point. The correction unit rewrites a value of the teaching point stored in the variable.

According to the present disclosure, the device can directly correct the teaching point stored in the variable of the program.

In the disclosure above, the robot operates according to a program including a variable for storing the teaching point. The correction unit generates another variable for storing a correction value of the teaching point, and generates a code for adding or subtracting a value of the correction value stored in the other variable to and from a value of the teaching point stored in the variable.

According to the present disclosure, the device can add, to the program, a code for correcting the teaching point stored in the variable of the program.

According to an embodiment, a method for teaching a robot by a computer is provided. The method includes: generating a teaching point for the robot in a 3D space; recognizing a landmark placed in each of the 3D space and a real space; extracting a difference between a position and an orientation of a workpiece in the 3D space and a position and an orientation of the workpiece in the real space based on a position and an orientation of the landmark placed in the 3D space and a position and an orientation of the landmark placed in the real space; and correcting the teaching point based on the difference.

According to the present disclosure, the method can correct the teaching point based on the difference (deviation) in the position and the orientation of the workpiece between in the 3D space and in the real space. This eliminates the need for the user to manually and finely adjust the teaching point for the robot on site.

According to an embodiment, a method for teaching a robot by a computer is provided. The program causes the computer to perform: generating a teaching point for the robot in a 3D space; recognizing a landmark placed in each of the 3D space and a real space; extracting a difference between a position and an orientation of a workpiece in the 3D space and a position and an orientation of the workpiece in the real space based on a position and an orientation of the landmark placed in the 3D space and a position and an orientation of the landmark placed in the real space; and correcting the teaching point based on the difference.

According to the present disclosure, the program can correct the teaching point based on the difference (deviation) in the position and the orientation of the workpiece between in the 3D space and in the real space. This eliminates the need for the user to manually and finely adjust the teaching point for the robot on site.

### ADVANTAGEOUS EFFECTS OF INVENTION

According to an embodiment, robot teaching data can be corrected based on the deviation between the position of each object in the 3D space and the position of each object in the real space.

The foregoing and other objects, features, aspects and advantages of the present disclosure will become more apparent from the following detailed description of the present disclosure when taken in conjunction with the accompanying drawings.

### BRIEF DESCRIPTION OF DRAWINGS

Fig. 1 shows an application example of a technique of the present disclosure.
Fig. 2 shows a first example of the system to which the technique of the present disclosure can be applied.
Fig. 3 shows a second example of the system configuration to which the technique of the present disclosure can be applied.
Fig. 4 shows a third example of the system configuration to which the technique of the present disclosure can be applied.
Fig. 5 shows hardware configuration examples of a device 100 and a programmable logic controller (PLC) 220.
Fig. 6 shows an example functional block of software 110.
Fig. 7 shows a first example of display of a landmark 120 and information for correcting teaching points by software 110.
Fig. 8 shows an example data configuration of teaching data and an example difference in teaching data between before and after correction.
Fig. 9 shows a first example of the program of robot 130 and parameters thereof.
Fig. 10 shows a second example of the program of robot 130 and parameters thereof.
Fig. 11 shows a second example of display of landmark 120 and information for correcting teaching points by software 110.
Fig. 12 is a flowchart showing an example procedure of teaching data correction process by a device 100.

### DESCRIPTION OF EMBODIMENTS

An embodiment of the technical idea according to the present disclosure will be described below with reference to the drawings. In the description below, the same or corresponding parts have the same reference characters allotted. Their names and functions are also the same. Therefore, detailed description thereof will not be repeated.

### <A. Application Example>

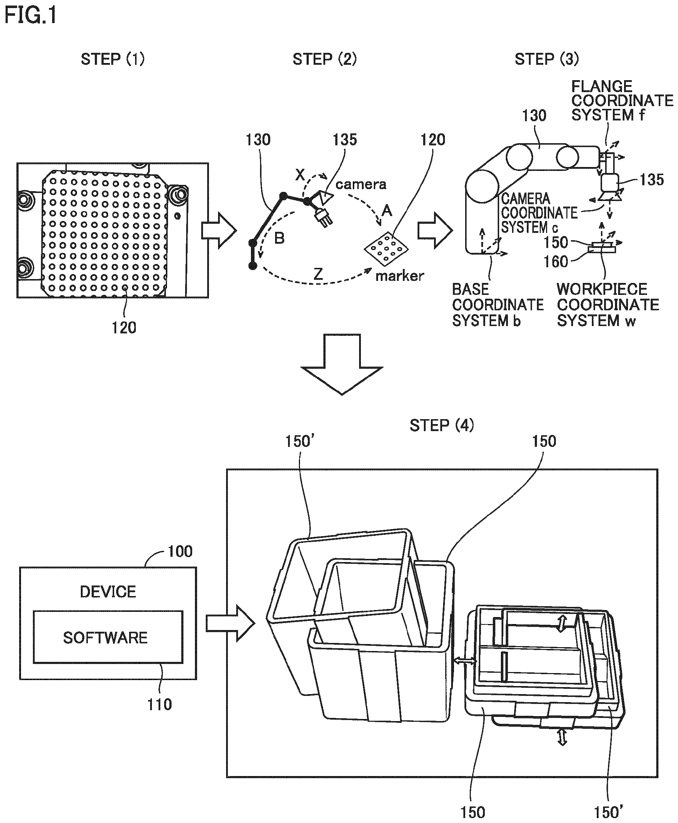

Fig. 1 shows an application example of a technique of the present disclosure. The technique of the present disclosure corrects robot teaching data based on a deviation between a position of each object in a 3D space and a position of each object in a real space. An application example of the technique of the present disclosure will be described using, as an example, a process of correcting teaching data for a robot 130 by a device 100 according to the present embodiment. Device 100 can implement the functions described below by executing software 110. In an aspect, some of the functions of software 110 may be implemented as hardware.

Herein, the term "device" encompasses a configuration including one or more devices, a server, a virtual machine or a container constructed in a cloud environment, or a system including at least some of them. The device may also include an information processor such as a personal computer, a workstation, a server device, a tablet, or a smartphone, and a PLC, or may be a combination thereof. In an aspect, device 100 may be connected to input/output devices, such as a display and a keyboard to be used by a user. In another aspect, device 100 may provide various functions to the user as a cloud service or a web application via a network. In this case, the user may use the functions of device 100 via a browser or client software installed on his or her terminal.

Herein, also, the term "workpiece" means an object to be transported, inspected, treated, or processed as appropriate, in a line. The workpiece may be made of any material. By way of example, the workpiece may be made of metal, resin, paper, food, any other material, or a combination thereof. The workpiece may also have any shape. By way of example, the workpiece may be a rigid object such as a box made of metal or resin, or a flexible object such as a film. Further, the workpiece may have any color, which may be semitransparent or transparent.

Herein, also, the term "robot" encompasses a vertical articulated robot, a horizontal articulated robot, a parallel link robot, and any other articulated robot. A robot may also include any number of joints (also referred to as axes). In addition, the robot may be configured to allow various tools to be attached to and detached from its tip. By way of example, the robot may be configured to allow a pick tool, a processing tool, an inspection tool, or any other tool to be attached and detached thereto and therefrom.

### (a. Deviation of Workpiece)

First, a deviation between a position of a workpiece in the 3D space and a position of the workpiece in the real space will be described. For example, it is assumed that the user wants to cause robot 130 to pick and place a workpiece 150 (grasp workpiece 150 and place workpiece 150 in a different location) in the line. In this case, the user teaches robot 130 the operation of picking and placing workpiece 150 using simulation software or the like.

More specifically, the user constructs, in the 3D space, a virtual line including robot 130, workpiece 150, a base 160 on which workpiece 150 is placed, and the like. Subsequently, the user generates teaching data such that robot 130 can pick and place workpiece 150 in the 3D space. "Teaching data" is data indicating an operation or a movement path of robot 130, and includes a plurality of teaching points indicating the respective points on the path along which the tool at the tip of robot 130 moves. "Teaching points" include the coordinates (each of the x-axis, y-axis, and z-axis) and orientation (the amount of rotation (angle) relative to each of the x-axis, y-axis, and z-axis) of the tool attached to the tip of robot 130, at a certain time. The teaching point can also be considered to be a point through which the operation of robot 130 passes. Hereinafter, for simplicity of description, that "robot 130 moves the tool at the tip to a certain teaching point" may also be referred to as that "robot 130 moves to a certain teaching point" or "robot 130 moves".

For example, it is assumed that the teaching data includes a first teaching point, a second teaching point, and a third teaching point. In this case, based on the teaching data, robot 130 moves to the first teaching point at a first time, moves to the second teaching point at a second time, and moves to the third teaching point at a third time. In this manner, the user can generate a robot operation by a combination of a plurality of teaching points (teaching data).

The user can operate robot 130 placed on the line constructed in the real space using the teaching data generated with simulation software. However, the line constructed in the real space may deviate in shape and position from the line constructed in the 3D space due to manufacturing errors of parts, distortion of parts, and assembly errors between parts. As a result, as shown in Fig. 1, a deviation occurs between the position of workpiece 150 in the 3D space and the position of a workpiece 150' in the real space. Consequently, the user needs to further finely adjust the teaching data for robot 130 using the line constructed in the real space (on site). The term "position" herein includes either or both of coordinates (position) (each of the x-axis, y-axis, and z-axis) and orientation (the amount of rotation (angle) relative to each of the x-axis, y-axis, and z-axis) in any coordinate system. Thus, the term "position" hereinafter may be read as "position and orientation". By way of example, the process of calculating a deviation between the position of workpiece 150 in the 3D space and the position of workpiece 150 in the real space can be read as the process of calculating a deviation (extracting a difference) in position (coordinates (each of the x-axis, y-axis, and z-axis)) and orientation (amount of rotation (angle) relative to each of the x-axis, y-axis, and z-axis) of each workpiece 150. The term "deviation" herein includes either or both of a deviation in coordinates (each of the x-axis, y-axis, and z-axis) and a deviation in orientation (the amount of rotation (angle) relative to each of the x-axis, y-axis, and z-axis).

### (b. Detection of Deviation of Workpiece)

Next, description will be given of a mechanism in which device 100 according to the present embodiment detects a deviation between the position of the workpiece in the 3D space and the position of the workpiece in the real space.

Device 100 can calculate the position of workpiece 150 in the real space using a landmark 120. "Landmark 120" is a reference mark for calculating the position of each object (e.g., workpiece 150, base 160) as viewed from robot 130. By way of example, landmark 120 is a hole, a mark, or the like, and device 100 can calculate the position of each object as viewed from robot 130 using a plurality of landmarks 120. In an aspect, a plate or the like including landmarks 120 may be placed on base 160. In another aspect, a hole, a mark, or the like provided on base 160 may be used as landmark 120.

First, device 100 calculates the distance and direction from robot 130 to landmark 120 in the 3D space. In an aspect, robot 130 in the 3D space may include a camera 135 at its tip. In this case, device 100 may calculate the distance and direction from robot 130 to landmark 120 in the 3D space based on an image of landmark 120 captured by camera 135. In another aspect, device 100 may calculate the distance and direction from robot 130 to landmark 120 in the 3D space based on the coordinates of robot 130 and the coordinates of landmark 120 held by simulation software. Device 100 then calculates the distance and direction from landmark 120 to workpiece 150 in the 3D space in a similar procedure.

Subsequently, device 100 obtains the image of landmark 120 captured by camera 135 attached to the tip of robot 130 in the real space. Device 100 calculates the distance from robot 130 to landmark 120 in the real space based on the image of landmark 120 captured by camera 135. Subsequently, device 100 calculates the distance and direction from landmark 120 to workpiece 150 in the real space in a similar procedure. Further, device 100 can calculate the orientation of workpiece 150 based on changes in the distance between landmarks 120, a distortion of the shape of each landmark 120, and the like. Since landmarks 120 are provided on base 160 or the like on which workpiece 150 is placed, device 100 can estimate the distortion or inclination of base 160 based on the change in distance between landmarks 120 and the distortion of the shape of each landmark 120. Further, device 100 can calculate the orientation (e.g., inclination) of workpiece 150 based on the estimated distortion or inclination of base 160.

Subsequently, device 100 extracts a first difference between the distance and direction from robot 130 to landmark 120 in the 3D space and the distance and direction from robot 130 to landmark 120 in the real space. Device 100 also extracts a second difference between the distance and direction from landmark 120 to workpiece 150 in the 3D space and the distance and direction from landmark 120 to workpiece 150 in the 3D space. Device 100 calculates the amount of deviation of workpiece 150 as viewed from robot 130 based on the first difference and the second difference. The amount of deviation of workpiece 150 as viewed from robot 130 is the difference between the distance to workpiece 150 as viewed from robot 130 in the 3D space and the distance to workpiece 150 as viewed from robot 130 in the real space.

It is assumed that in an aspect, landmark 120 and workpiece 150 are unlikely to become misaligned, for example, landmark 120 and workpiece 150 are placed on the same base 160 with high accuracy. In this case, device 100 may calculate the amount of deviation of workpiece 150 as viewed from robot 130 based on the first difference. For example, when the first difference is 1 in the x-axis direction, the amount of deviation of workpiece 150 as viewed from robot 130 is also 1 in the x-axis direction.

Device 100 may calculate the distance from robot 130 to each of landmarks 120 both in the 3D space and in the real space, or may calculate the distance from robot 130 to a landmark 120 included in landmarks 120. Similarly, device 100 may calculate the distance from each of landmarks 120 to workpiece 150, or calculate the distance from a landmark 120 included in landmarks 120 to workpiece 150.

### (c. Correction of Teaching Data)

Next, description will be given of a method of correcting, by device 100 according to the present embodiment, teaching data based on a deviation between the position of workpiece 150 in the 3D space and the position of workpiece 150 in the real space.

Robot 130 is controlled by a programmable logic controller (PLC) 220 or the like. More specifically, PLC 220 executes a program for robot 130 and transmits a command to robot 130. Robot 130 moves based on a target position included in the command or the angle of each joint (axis). The target position is the position to which robot 130 should move and corresponds to the teaching point. The program for robot 130 includes variables that store the respective teaching points included in the teaching data. Device 100 changes the values of the variables that store the respective teaching points based on the amount of deviation of workpiece 150 as viewed from robot 130. By way of example, when the amount of deviation of workpiece 150 as viewed from robot 130 is 1 in the x-axis direction, device 100 displaces the x-axis value of each of the teaching points stored in the variable by 1.

In an aspect, device 100 may generate variables (differential variables) for storing the amount of deviation of workpiece 150 as viewed from robot 130. In this case, device 100 may add, to the program, a code for adding or subtracting the value of the differential variable to or from the value of each variable (the value of each of the teaching points before and after correction).

In another aspect, device 100 may store each of the teaching points before and after correction in an array, a structure, a class, or any other data structure. Similarly, device 100 may generate an array, a structure, a class, or any other data structure for storing the amount of deviation of workpiece 150 as viewed from robot 130. In description below, device 100 will be described using the example in which the variable is used, but the variable may be read as an array, a structure, a class, or any other data structure.

### (d. Overview of Operation of Device 100)

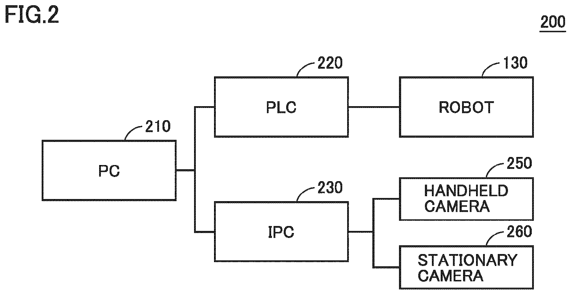

Next, an overview of operation of device 100 (software 110) will be described. Steps (1) to (4) below indicate a process after the completion of teaching data generation, that is, a process of operating robot 130 in the real space and checking a deviation between the position of workpiece 150 in the 3D space and the position of workpiece 150 in the real space. The following steps may be performed by PLC 220 or an industrial personal computer (IPC) 230 (industrial PC) (see Fig. 2). In this case, PLC 220 or IPC 230 may execute part or all of software 110. Alternatively, PLC 220 or IPC 230 may perform the following steps (1) to (4) based on a command from device 100.

In step (1), device 100 performs calibration of camera 135 provided at the tip of robot 130. The calibration is a process for defining the positional relationship between camera 135 and landmark 120 when camera 135 captures an image of image landmark 120. The positional relationship herein includes at least one of the distance from camera 135 to landmark 120 and the direction in which camera 135 captures an image of landmark 120 (based on, for example, the direction in which landmarks 120 are arranged). In an aspect, the calibration of camera 135 may be performed with camera 135 removed from robot 130. In another aspect, the calibration of camera 135 may be performed with camera 135 attached to robot 130. In still another aspect, the calibration of camera 135 may be performed only in the real space or both in the 3D space and in the real space.

In step (2), device 100 operates robot 130 such that camera 135 is located at the position set in the calibration. In an aspect, when landmark 120 in the real space is distorted, device 100 moves robot 130 to such a position as to obtain an image that is similar to an image of landmark 120 captured by camera 135 during the calibration to a certain degree or more. In so doing, device 100 may calculate a degree of similarity of the image using a predetermined threshold.

In step (3), device 100 extracts the first difference between the distance and direction from robot 130 to landmark 120 in the 3D space and the distance and direction from robot 130 to landmark 120 in the real space. Device 100 also extracts the second difference between the distance and direction from landmark 120 to workpiece 150 in the 3D space and the distance and direction from landmark 120 to workpiece 150 in the 3D space. Device 100 calculates an amount of deviation of workpiece 150 as viewed from robot 130 based on the first difference and the second difference.

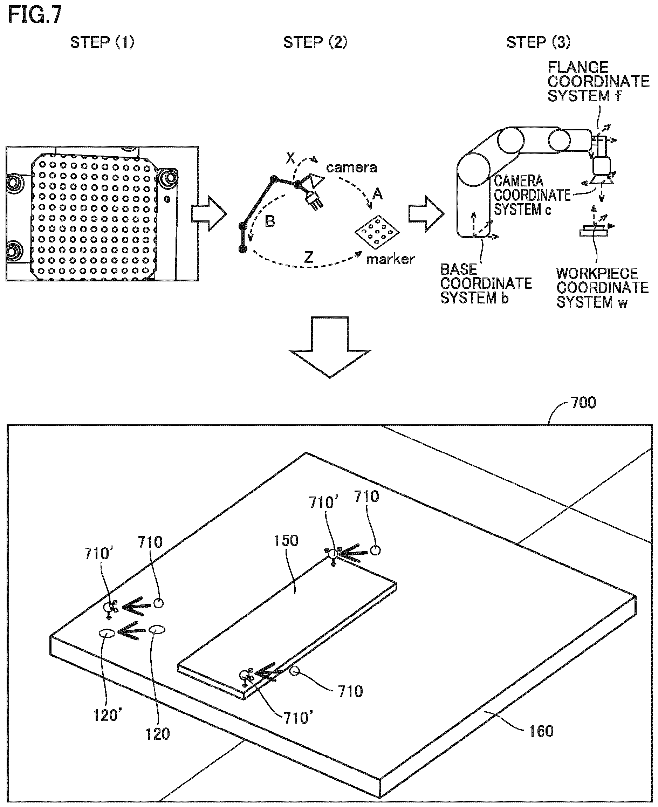

In step (4), device 100 displays, in the 3D space, workpiece 150 placed in the 3D space and workpiece 150 detected in the real space. Similarly, as shown in Fig. 7, device 100 can display, in the 3D space, landmark 120 placed in the 3D space and landmark 120 detected in the real space. Further, device 100 can display the teaching point before correction and the teaching point after correction in the 3D space. Thus, device 100 can visualize, and display in the display, the amount of deviation of workpiece 150 as viewed from robot 130 and the contents of the correction of the teaching data. In an aspect, device 100 may automatically correct the teaching data. In another aspect, device 100 may correct teaching data based on the receipt of a user's operation.

### <B. System Configuration>

Next, example variations of a system configuration to which the technique of the present disclosure can be applied will be described with reference to Figs. 2 to 4. As will be described below, the technique of the present disclosure can be flexibly applied to various system configurations used at manufacturing sites.

Fig. 2 shows a first example of the system to which the technique of the present disclosure can be applied. A system 200 includes a PC 210, a PLC 220, an IPC 230, robot 130, a handheld camera 250, and a stationary camera 260. In an aspect, system 200 may include only one of handheld camera 250 or stationary camera 260.

PC 210 is a device that executes software 110 and corresponds to device 100. PC 210 may perform, by itself, a process that is completed in the 3D space, such as reception of teaching data for robot 130. PC 210 cooperates with PLC 220 and IPC 230 when the process using robot 130, handheld camera 250, stationary camera 260, or the like is necessary in the real space. PC 210 transmits a command to PLC 220 when controlling robot 130 in the real space. PLC 220 controls robot 130 based on the command received from PC 210. When controlling handheld camera 250 and/or stationary camera 260 in the real space, PC 210 transmits a command to IPC 230. IPC 230 controls handheld camera 250 and/or stationary camera 260 based on the command received from PC 210.

PLC 220 controls robot 130. PLC 220 can control not only robot 130 but also conveyor belts, sensors, cameras, various motors, or the like included in the line.

IPC 230 is an industrial PC intended for long-term operation in factories or the like. IPC 230 controls handheld camera 250 and/or stationary camera 260. IPC 230 also transmits images obtained from handheld camera 250 and/or stationary camera 260 to PC 210. When the system does not include PC 210, IPC 230 operates as device 100 instead of PC 210.

Robot 130 is an articulated robot and, for example, transfers, processes, and inspects a workpiece based on a command from PLC 220. Robot 130 receives, from PLC 220, a command including a target position (a target position of a tool attached to the tip of robot 130) or an angle of each joint (axis), and changes its orientation (moves) based on the command.

Handheld camera 250 is a camera attached to the tip of robot 130 and corresponds to camera 135 in Fig. 1. Handheld camera 250 captures images of workpiece 150 and landmark 120 and outputs the images to IPC 230.

Stationary camera 260 is a camera placed at a position independent of robot 130. Handheld camera 250 captures images of workpiece 150 and landmark 120 and outputs the images to IPC 230. Stationary camera 260 can be used instead of handheld camera 250. When stationary camera 260 is positioned so as to capture images of landmark 120 and workpiece 150, PC 210 can use stationary camera 260 instead of handheld camera 250 to perform the process described with reference to Fig. 1.

In an aspect, PC 210 may capture images of landmark 120 and workpiece 150 using both handheld camera 250 and stationary camera 260. In this case, PC 210 may detect the positional relationship between landmark 120 and workpiece 150 based on the image obtained from each of handheld camera 250 and stationary camera 260. Alternatively, PC 210 may detect the positional relationship between landmark 120 and workpiece 150 based on any of the respective images obtained from handheld camera 250 and stationary camera 260.

Next, description will be given of procedures (A) to (F) when devices included in system 200 perform the process described with reference to Fig. 1 in cooperation with each other.
(A) First, PC 210 accepts a teaching operation for robot 130 in the 3D space (simulation space) from the user. PC 210 generates teaching data for robot 130 based on the accepted teaching operation. PC 210 also stores the position of landmark 120 and the position of workpiece 150 in the 3D space.
(B) Next, PC 210 transmits a first command to PLC 220. PLC 220 operates robot 130 based on the received first command in order to obtain the position of landmark 120 and the position of workpiece 150 in the real environment. PLC 220 controls robot 130 to move handheld camera 250 to a calibration position. PLC 220 also controls robot 130 to move handheld camera 250 to the position at which images of landmark 120 and workpiece 150 are captured.
(C) PC 210 also transmits a second command to IPC 230. Based on the received second command, IPC 230 performs the calibration process for handheld camera 250 and the process of capturing images of landmark 120 and workpiece 150 by handheld camera 250.

In an aspect, IPC 230 may capture an image of landmark 120 with handheld camera 250 after robot 130 has moved to the calibration position, and transmit the image to PC 210. In this case, PC 210 performs calibration of handheld camera 250 based on the received image. In another aspect, IPC 230 may capture an image of landmark 120 with handheld camera 250 after robot 130 has moved to the calibration position, and perform calibration of handheld camera 250 based on the captured image. In this case, IPC 230 transmits a calibration result to PC 210.

In another aspect, the calibration process may be completed prior to the transmission of the second command. In this case, PC 210 transmits a calibration command to PLC 220 and IPC 230 in advance. PLC 220 moves robot 130 (handheld camera 250) to the calibration position based on the received calibration command. Based on the received calibration command, IPC 230 captures an image of landmark 120 with handheld camera 250 that has moved to the calibration position, and outputs an image for calibration to PC 210.

In still another aspect, stationary camera 260 may be used instead of handheld camera 250. In this case, calibration of stationary camera 260 may be performed using a zoom function or any other function of stationary camera 260.

PC 210 may transmit the first command and the second command simultaneously or individually. PLC 220 that has received the first command and IPC 230 that has received the second command cooperate to perform the process of capturing images of landmark 120 and workpiece 150. PC 210 can analyze the images obtained from IPC 230 to obtain the position of landmark 120 and the position of workpiece 150 in the real environment. In an aspect, IPC 230 may analyze the images to obtain the position of landmark 120 and the position of workpiece 150 in the real environment. In this case, IPC 230 transmits the information on the position of landmark 120 and the position of workpiece 150 in the real environment to PC 210.

(D) Subsequently, PC 210 analyzes the images obtained from IPC 230 to obtain the position of landmark 120 and the position of workpiece 150 in the real environment. PC 210 also extracts the difference between the position of landmark 120 and the position of workpiece 150 in the 3D space and the position of landmark 120 and the position of workpiece 150 in the real environment.

(E) Next, PC 210 corrects the teaching data based on the extracted difference. At the same time, PC 210 displays, on the display, a screen in the 3D space including teaching points before and after correction. The user can visually confirm the contents of correction of the teaching data by referring to the screen. PC 210 also transmits a program reflecting correction of the teaching data to PLC 220. In an aspect, the program reflecting the correction of the teaching data may be a program in which the teaching point stored in the variable is replaced with a corrected value. In another aspect, the program reflecting the correction of the teaching data may additionally have a code for adding or subtracting the correction value to or from the teaching point stored in the variable.

(F) Subsequently, PLC 220 executes the program reflecting the correction of the teaching data to run a motion test of robot 130 both in the 3D space and in the real space. When robot 130 needs to be further finely adjusted, system 200 repeatedly performs operations of (A) to (F).

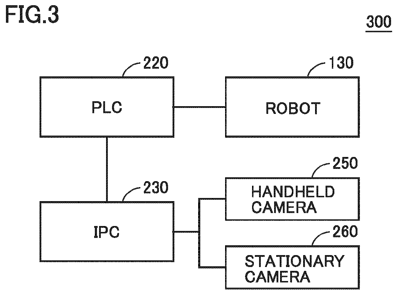

Fig. 3 shows a second example of the system configuration to which the technique of the present disclosure can be applied. A system 300 includes PLC 220, IPC 230, robot 130, handheld camera 250, and stationary camera 260. In an aspect, system 300 may include only one of handheld camera 250 or stationary camera 260.

Unlike system 200, system 300 does not include PC 210. IPC 230 in system 300 has the functions of both PC 210 and IPC 230 in system 200. In other words, IPC 230 in system 300 performs the process of PC 210 in procedures (A) to (F) described with reference to Fig. 2 and the process of IPC 230. In addition, IPC 230 in system 300 replaces the process in which communication occurs between PC 210 and IPC 230 in procedures (A) to (F) described with reference to Fig. 2 with the process in IPC 230, and performs the process.

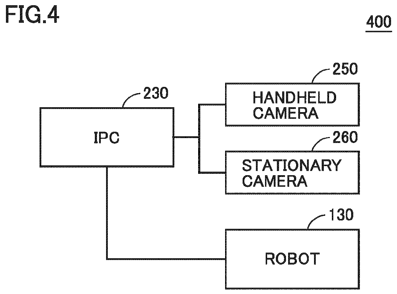

Fig. 4 shows a third example of the system configuration to which the technique of the present disclosure can be applied. A system 400 includes IPC 230, robot 130, handheld camera 250, and stationary camera 260. In an aspect, system 400 may include only one of handheld camera 250 or stationary camera 260.

Unlike systems 200, 300, system 400 does not include PC 210 and PLC 220. IPC 230 in system 400 controls robot 130 and any other device, similarly to PLC 220. IPC 230 in system 400 has the functions of both PC 210 and IPC 230 in system 200. In other words, IPC 230 in system 400 performs all of procedures (A) to (F) described with reference to Fig. 2.

### <C. Hardware and Software Configurations>

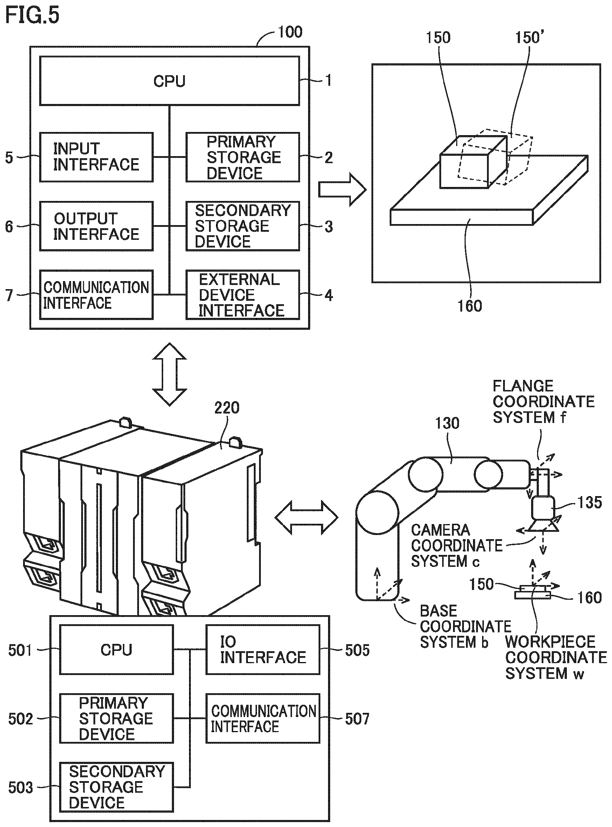

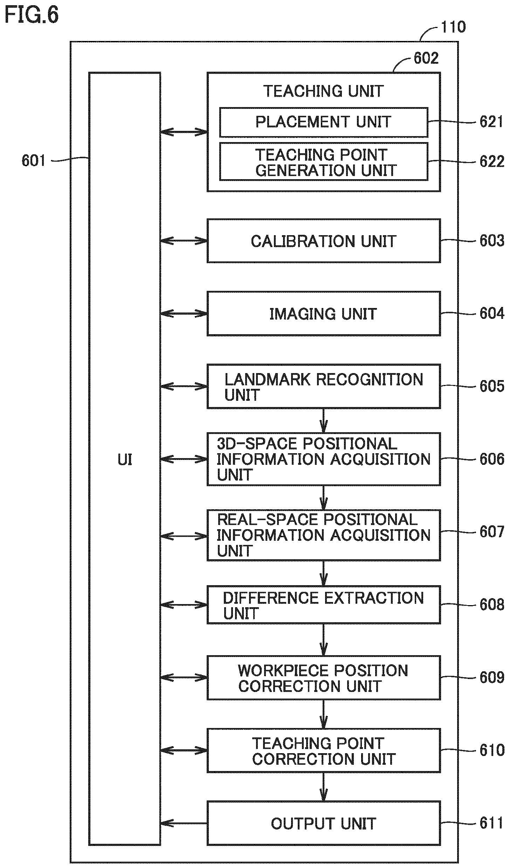

Next, hardware and software configuration examples of each device related to the technique of the present disclosure will be described with reference to Figs. 5 and 6.

Fig. 5 shows hardware configuration examples of device 100 and PLC 220. PC 210 and IPC 230 may have the hardware configuration of device 100 shown in Fig. 5. The hardware configuration shown in Fig. 5 is the main configuration related to the technique of the present disclosure, and device 100 (PC 210 and/or IPC 230) and PLC 220 may further include any configuration other than the configuration shown in Fig. 5.

Device 100 includes a central processing unit (CPU) 1, a primary storage device 2, a secondary storage device 3, an external device interface 4, an input interface 5, an output interface 6, and a communication interface 7.

CPU 1 can execute a program for implementing various functions of device 100. CPU 1 is configured of, for example, at least one integrated circuit. The integrated circuit may be composed of, for example, at least one central processing unit (CPU), at least one graphics processing unit (GPU), at least one field programmable gate array (FPGA), at least one application specific integrated circuit (ASIC), or a combination thereof.

Primary storage device 2 stores a program to be executed by CPU 1 and data to be referenced by CPU 1. In an aspect, primary storage device 2 may be implemented by dynamic random access memory (DRAM), static random access memory (SRAM), or the like.

Secondary storage device 3 is a non-volatile memory and may store a program to be executed by CPU 1 and data to be referenced by CPU 1. In that case, CPU 1 executes the program loaded from secondary storage device 3 into primary storage device 2 and references the data loaded from secondary storage device 3 into primary storage device 2. In an aspect, secondary storage device 3 may be implemented by a hard disk drive (HDD), solid state drive (SSD), erasable programmable read only memory (EPROM), electrically erasable programmable read only memory (EEPROM), flash memory, or the like.

External device interface 4 can be connected to any external device such as a printer, a scanner, or an external HDD. In an aspect, external device interface 4 may be implemented by a universal serial bus (USB) terminal or the like.

Input interface 5 can be connected to any input device such as a keyboard, a mouse, a touchpad, or a gamepad. In an aspect, input interface 5 may be implemented by a USB terminal, a PS/2 terminal, a Bluetooth (registered trademark) module, or the like.

Output interface 6 can be connected to any output device such as a cathode-ray tube display, a liquid crystal display, or an organic electro-luminescence (EL) display. In an aspect, output interface 6 may be implemented by a USB terminal, a D-sub terminal, a digital visual interface (DVI) terminal, a high-definition multimedia interface (HDMI) (registered trademark) terminal, or the like.

Communication interface 7 is connected to a wired or wireless network device. In an aspect, communication interface 7 may be implemented by a wired local area network (LAN) port and a wireless fidelity (Wi-Fi) (registered trademark) module, or the like. In another aspect, communication interface 7 may transmit and receive data using a communication protocol such as a transmission control protocol/internet protocol (TCP/IP) or a user datagram protocol (UDP).

In an aspect, device 100 (IPC 230) may include an input/output (IO) interface for communicating with robot 130 and any other device, in addition to the above configuration. The IO interface corresponds to an IO interface 505 of PLC 220.

PLC 220 includes a CPU 501, a primary storage device 502, a secondary storage device 503, an external device interface 4, IO interface 505, and a communication interface 507.

CPU 501 can execute a program for implementing various functions of PLC 220. By way of example, CPU 501 can control robot 130, motors, sensors, and other devices included in the line by executing the program. CPU 501 is configured of, for example, at least one integrated circuit. The integrated circuit may be configured of, for example, at least one CPU, at least one GPU, at least one FPGA, at least one ASIC, or a combination thereof.

Primary storage device 502 stores a program to be executed by CPU 501 and data to be referenced by CPU 501. In an aspect, primary storage device 502 may be implemented by DRAM, SRAM, or the like.

Secondary storage device 503 is a non-volatile memory and may store a program to be executed by CPU 501 and data to be referenced by CPU 501. In that case, CPU 501 executes the program read from secondary storage device 503 to primary storage device 502 and references the data read from secondary storage device 3 to primary storage device 2. In an aspect, secondary storage device 503 may be implemented by HDD, SSD, EPROM, EEPROM, flash memory, or the like.

IO interface 505 is connected to a field network connected with various industrial devices. PLC 220 can control robot 130, motors, sensors, and other devices included in the line via IO interface 505.

Communication interface 507 is connected to a wired or wireless network device. By way of example, PLC 220 can communicate with device 100 (PC 210 and/or IPC 230) via communication interface 507. In an aspect, communication interface 507 may be implemented by a wired LAN port, a Wi-Fi module, or the like. In another aspect, communication interface 507 may transmit and receive data using a communication protocol such as TCP/IP or UDP.

PC 210 mainly performs the process of generating teaching data in the 3D space, the calibration process for camera 135 (handheld camera 250 and/or stationary camera 260), the process of correcting teaching data, and any other process. IPC 230 mainly performs the process of controlling camera 135 (handheld camera 250 and/or stationary camera 260). In an aspect, IPC 230 may have the function of PC 210. PLC 220 mainly controls robot 130.

Fig. 6 shows an example functional block of software 110. In an aspect, software 110 may be installed and executed on PC 210 or IPC 230. In another aspect, some of the modules (functional blocks) of software 110 shown in Fig. 6 may be installed and executed on PLC 220. In still another aspect, modules of software 110 do not need to be installed together on a single device, and may be distributed in any of PC 210, IPC 230, and PLC 220, as appropriate.

Software 110 includes, as modules, a user interface (UI) 601, a teaching unit 602, a calibration unit 603, an imaging unit 604, a landmark recognition unit 605, a 3D-space positional information acquisition unit 606, a real-space positional information acquisition unit 607, a difference extraction unit 608, a workpiece position correction unit 609, a teaching point correction unit 610, and an output unit 611. Teaching unit 602 includes a placement unit 621 and a teaching point generation unit 622.

UI 601 accepts various operation inputs from the user. By way of example, UI 601 can accept an operation for constructing the simulation environment (e.g., placement of various objects in the 3D space), an operation for teaching robot 130, an operation related to the process of correcting teaching data, or the like. UI 601 also displays various information. By way of example, UI 601 can display the 3D space, simulation execution status and results, information on teaching data correction, and UI components such as buttons and forms for accepting various operational inputs. The user can also use the functions of other modules via UI 601.

In an aspect, device 100 may display UI 601 on a display connected to device 100. In another aspect, when software 110 is provided as a web application or the like, device 100 may transmit information of UI 601 to a user's terminal. In this case, the user's terminal may use client software or a browser to display UI 601 on the display.

Teaching unit 602 has the function necessary to generate teaching data for robot 130 in the 3D space. More specifically, placement unit 621 places various objects in the 3D space based on an operation from the user. The user can reproduce the line to be constructed by placing various objects in the 3D space. Teaching point generation unit 622 performs the process of teaching robot 130 and generates teaching points in the 3D space based on operations from the user. Teaching point generation unit 622 outputs one or more teaching points included in a series of operations of robot 130 as a single set of teaching data.

Calibration unit 603 performs the calibration process for camera 135 (handheld camera 250 and/or stationary camera 260). Calibration unit 603 may perform the calibration process both in the 3D space and in the real space or perform the calibration process only in the real space. Calibration unit 603 analyzes the image of landmark 120 captured by camera 135 and determines the positional relationship between camera 135 and landmark 120. Determining the positional relationship between camera 135 and landmark 120 includes determining the position of camera 135 when capturing an image of landmark 120 (the orientation of robot 130 at imaging). In an aspect, when stationary camera 260 is used, calibration unit 603 may analyze the image of landmark 120 captured by camera 135 and determines the focus setting or the like of camera 135.

Imaging unit 604 performs the imaging process using camera 135. Imaging unit 604 can perform the imaging process and output images to other modules based on requests from any other module. Imaging unit 604 may associate the information on orientation of robot 130 at the time of imaging with an image and output the information to other modules together with the image. In the 3D space, imaging unit 604 performs the imaging process using virtual camera 135. Contrastingly, in the real space, imaging unit 604 performs the imaging process using handheld camera 250 and/or stationary camera 260 attached to robot 130. For the imaging process in the real space, imaging unit 604 needs to operate PLC 220 and IPC 230. Thus, by outputting commands to PLC 220 and IPC 230, imaging unit 604 causes PLC 220 to control robot 130 and IPC 230 to capture an image with handheld camera 250 and/or stationary camera 260.

Landmark recognition unit 605 analyzes images output by imaging unit 604 (an image captured in the 3D space and an image captured in the real space) and detects landmark 120 in the images. When a plurality of landmarks 120 are included in the image, landmark recognition unit 605 can estimate the distortion or the like of base 160 on which landmarks 120 are placed, based on the distance between landmarks 120, the distortion of the shape of each landmark 120, or the like. Landmark recognition unit 605 may also calculate the distance from robot 130 to landmark 120 based on the information on orientation of robot 130 at imaging and the result of detection of landmark 120.

3D-space positional information acquisition unit 606 analyzes the image captured in the 3D space by imaging unit 604 and detects workpiece 150 in the image. 3D-space positional information acquisition unit 606 also estimates the positions of landmark 120 and workpiece 150 in the 3D space. 3D-space positional information acquisition unit 606 obtains, from landmark recognition unit 605, information such as the position of landmark 120 in the 3D space, the distance from robot 130 to landmark 120, and the distortion of base 160. 3D-space positional information acquisition unit 606 calculates the position of workpiece 150 relative to robot 130 in the 3D space from the information obtained from landmark recognition unit 605 and the information on workpiece 150 in the image. In an aspect, 3D-space positional information acquisition unit 606 may calculate the positions of landmark 120 and workpiece 150 relative to robot 130 in the 3D space based on the positional information of each object in the 3D space held by the simulator constructed into or linked to software 110. The functions of landmark recognition unit 605 and 3D-space positional information acquisition unit 606 determine positional relationship among robot 130, landmark 120, and workpiece 150 in the 3D space.

Real-space positional information acquisition unit 607 analyzes the image captured in the real space by imaging unit 604 and detects workpiece 150 in the image. Real-space positional information acquisition unit 607 also estimates the positional relationship between landmark 120 and workpiece 150 in the real space. Real-space positional information acquisition unit 607 obtains, from landmark recognition unit 605, information such as the position of landmark 120 in the real space, the distance from robot 130 to landmark 120, and the distortion of base 160. Real-space positional information acquisition unit 607 calculates the position of workpiece 150 relative to robot 130 in the real space from the information obtained from landmark recognition unit 605 and information on workpiece 150 in the image. The functions of landmark recognition unit 605 and real-space positional information acquisition unit 607 determine the positional relationship among robot 130, landmark 120, and workpiece 150 in the real space.

Difference extraction unit 608 obtains information on the positions of landmark 120 and workpiece 150 relative to robot 130 in the 3D space from 3D-space positional information acquisition unit 606, and obtains information on the positions of landmark 120 and workpiece 150 relative to robot 130 in the real space from real-space positional information acquisition unit 607. Difference extraction unit 608 extracts a deviation between in the 3D space and in the real space by comparing the information on the positions of landmark 120 and workpiece 150 relative to robot 130 in the 3D space and the information on the positions of landmark 120 and workpiece 150 relative to robot 130 in the real space. The deviation between in the 3D space and in the real space includes at least a deviation (difference) in the position of workpiece 150 between in the 3D space and in the real space. The deviation between in the 3D space and in the real space may further include a deviation (difference) of landmark 120 between in the 3D space and in the real space.

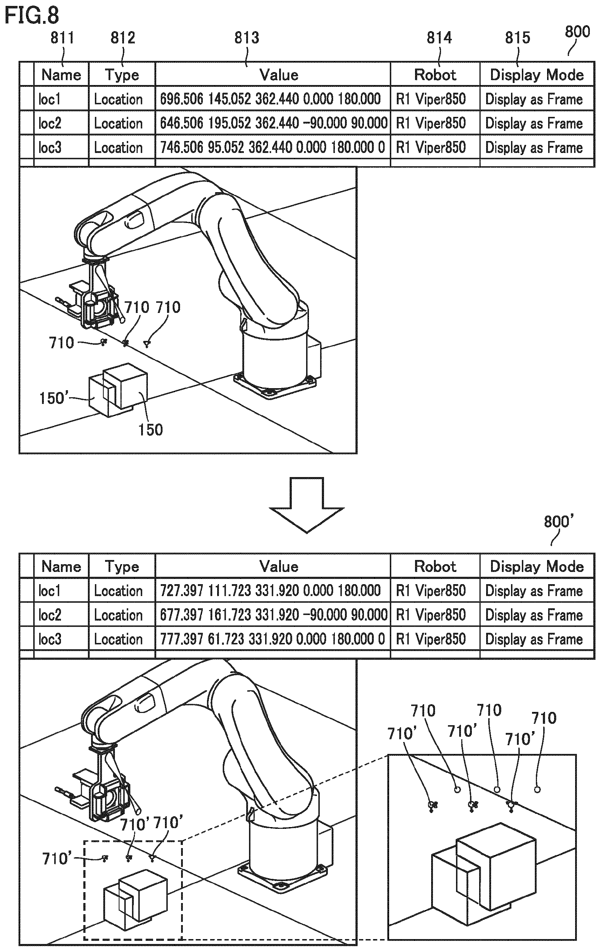

Workpiece position correction unit 609 generates data for displaying, in the 3D space, workpiece 150 and landmark 120 in the real space detected from the image in the real space. More specifically, workpiece position correction unit 609 calculates the coordinates of workpiece 150 in the real space when placed in the 3D space and the coordinates of landmark 120 in the real space when placed in the 3D space. These coordinates can be calculated based on the distance and direction to workpiece 150 and landmark 120 as viewed from robot 130. In an aspect, workpiece position correction unit 609 may calculate the difference in the coordinates of workpiece 150 in the real space from the coordinates of workpiece 150 in the 3D space. Workpiece position correction unit 609 may also calculate the difference in the coordinates of landmark 120 in the real space from the coordinates of landmark 120 in the 3D space. For example, the output data of workpiece position correction unit 609 is used to display, in the 3D space, workpiece 150 and landmark 120 in the real space, as shown in Figs. 7 and 8.

Teaching point correction unit 610 calculates a correction value for the teaching point based on the output data of workpiece position correction unit 609. For example, when the coordinates of workpiece 150 in the real space are displaced by 1 in the x-axis direction in the 3D space (or in the x-axis direction in the robot coordinates) relative to the coordinates of workpiece 150 in the 3D space, teaching point correction unit 610 also displaces the coordinates of the teaching point by 1 in the x-axis direction. In an aspect, teaching point correction unit 610 may output the corrected teaching point. In another aspect, teaching point correction unit 610 may output a difference value for correcting the teaching point. When the teaching data includes a plurality of teaching points, teaching point correction unit 610 may calculate a correction value for each teaching point, or may correct all teaching points with a common correction value.

Output unit 611 displays, in the 3D space, workpiece 150 and landmark 120 used to generate the teaching data before correction and workpiece 150 and landmark 120 in the real space. In an aspect, the screen output by output unit 611 may be output as part of UI 601. The user can visually confirm the deviation between in the 3D space and in the real space by referring to the display screen of output unit 611. In an aspect, teaching point correction unit 610 may automatically correct the teaching data. In another aspect, teaching point correction unit 610 may correct the teaching data based on an operation received by UI 601 from the user. For example, the user may input a correction value for each teaching point while referring to the display screen of output unit 611. In this case, teaching point correction unit 610 can generate corrected teaching data based on the value input by the user.

### <D. Procedure and UI for Correcting Teaching Point>

Next, example display of UI 601 and an example procedure of correcting the teaching data for robot 130 will be described with reference to Figs. 7 to 11.

Fig. 7 shows a first example of the display of landmarks 120 and information for correcting teaching points by software 110. A screen 700 is an example screen displayed on UI 601 after device 100 has performed the process of steps (1) to (4) described with reference to Fig. 1.

Screen 700 displays, in the 3D space, various information obtained in the 3D space and various information obtained in the real space. More specifically, screen 700 displays workpiece 150 and base 160. Screen 700 also displays landmark 120 and teaching points 710 in the 3D space, a landmark 120' detected in the real space, and teaching points 710' after correction. In the example of Fig. 7, only part of landmarks 120 is shown, but any number of landmarks 120 may be arranged on base 160, for example, in a grid.

The user can visually confirm a deviation of landmark 120 between in the 3D space and in the real space by comparing landmark 120 with landmark 120'. The user can also visually confirm a deviation of teaching point 710 between in the 3D space and in the real space by comparing teaching point 710 and teaching point 710'.

In an aspect, device 100 may also display workpiece 150 detected in the real space on screen 700, as shown in Fig. 1. In another aspect, device 100 may be configured to switch, based on an operation input from the user received via UI 601, between display and non-display of landmark 120, landmark 120', teaching point 710, teaching point 710', workpiece 150 placed in the 3D space, workpiece 150 detected in the real space, base 160, or any other object on screen 700.

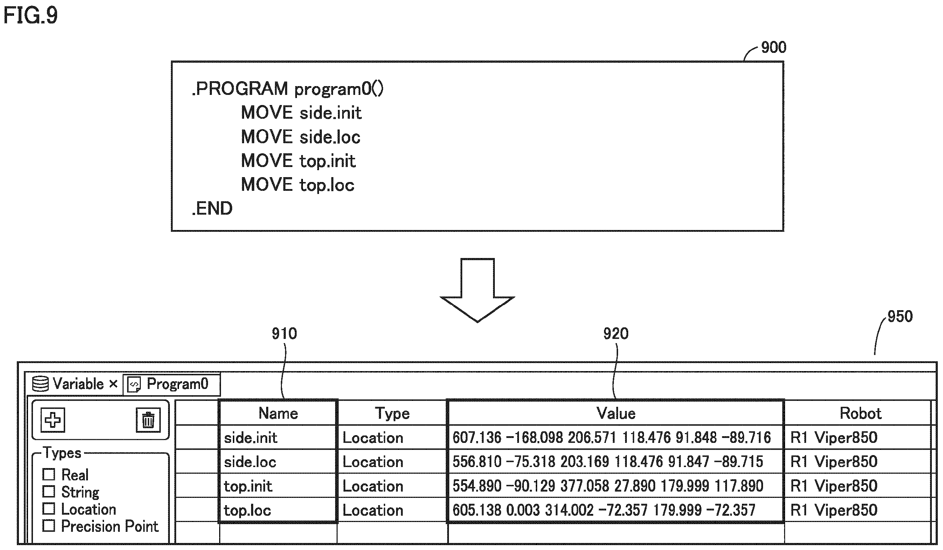

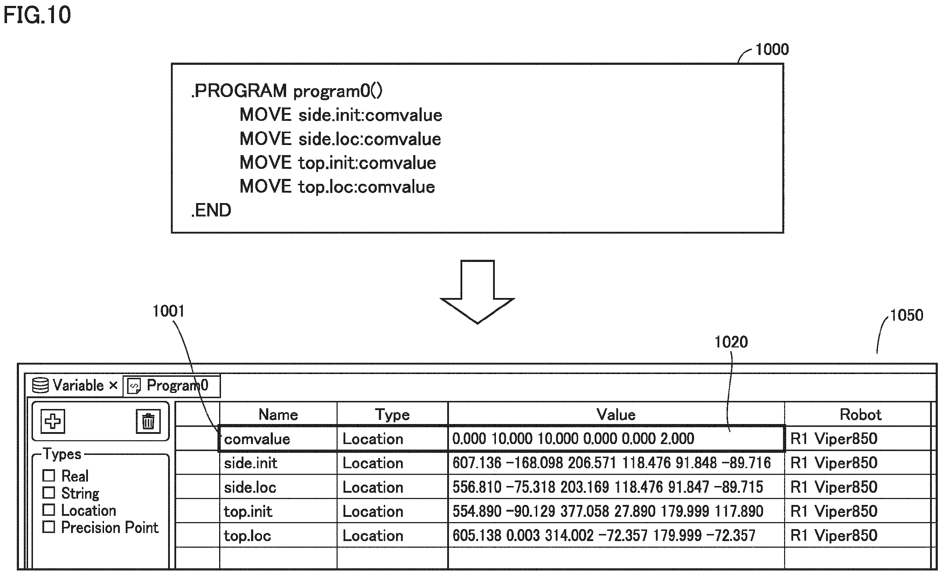

Device 100 may also perform a process of correcting the teaching data based on the operation input from the user received via UI 601, and update a program of robot 130 and the parameters stored in the variable of the program. An example of the process of correcting teaching data will be described later with reference to Figs. 9 and 10.

Fig. 8 shows an example data configuration of teaching data and an example difference in teaching data between before and after correction. The teaching data includes, as data items, a location name item 811, a data type item 812, a value item 813, a robot name item 814, and a display mode item 815. Rows correspond to the respective teaching points. In the example of Fig. 8, the teaching data includes three teaching points. Device 100 stores the teaching data generated by a user's operation in secondary storage device 3.

Location name item 811 is a name indicating each teaching point and is represented by any character string. In an aspect, the character string stored in location name item 811 may be used as a variable name of a program of robot 130 or part of the variable name. In this case, device 100 can generate part of the program (e.g., definition of a variable) with reference to location name item 811 of the teaching data.

Data type item 812 indicates the type of data of each teaching point. By way of example, when data type item 812 is "Location", the teaching point indicates the coordinates and orientation of a robot (or a tool attached to the tip of the robot).

Value item 813 is a specific value of each teaching point, and indicates the coordinates and orientation of a robot (or a tool attached to the tip of the robot). By way of example, value item 813 may include the coordinates of each of the x-axis, y-axis, and z-axis and the amount of rotation (angle) relative to each of the x-axis, y-axis, and z-axis.

Robot name item 814 is an identifier or name of robot 130 associated with each teaching point. Display mode item 815 indicates the display mode of each teaching point in the 3D space.

Teaching data 800 is teaching data before correction. Rows included in teaching data 800 correspond to the respective teaching points 710 before correction. Teaching data 800' is teaching data after correction. Rows included in teaching data 800 correspond to the respective teaching points 710' after correction. As can be seen from a comparison between teaching data 800 and teaching data 800', device 100 corrects the value of value item 813 of each teaching point based on the deviation between in the 3D space and in the real space. In an aspect, the teaching data may further include a correction value item for storing a correction value of a teaching point. In this case, instead of correcting the value of value item 813 of each teaching point, device 100 stores the difference value between each teaching point 710 and its corresponding teaching point 710' in the correction value item.

Fig. 9 shows a first example of the program for robot 130 and its parameters. A program 900 is an example program that controls robot 130. Program 900 is a program that moves robot 130 to four teaching points (side.init, side.loc, top.init, top.loc) in sequence. Parameters 950 include values to be stored in the respective variables of program 900. Parameters 950 include, as items, at least a variable name item 910 and a value item 920. Parameters 950 may further include, as items, a data type, a robot name item, and any other item.

Variable name item 910 indicates the name of each variable. Value item 920 is a value stored in the variable indicated by variable name item 910 and corresponds to each teaching point. Device 100 can generate parameters 950 of the program based on the teaching data. Device 100 can reflect the correction of teaching points in program 900 by changing the value of value item 920 from the value of the teaching point before correction (teaching point 710 in Fig. 7) to the value of the teaching point after correction (teaching point 710' in Fig. 7).

Fig. 10 shows a second example of the program of robot 130 and its parameters. A program 1000 is an example program that controls robot 130. Similar to program 900, program 1000 is a program that moves robot 130 to four teaching points (side.init, side.loc, top.init, top.loc) in sequence. Unlike program 900, program 1000 adds a correction value "comvalue" (a value of a value item 1020 of a correction value 1001) to each variable instead of directly correcting the value of each teaching point.

Parameters 1050 include values to be stored in the respective variables of a program 1010. Parameters 1050 include, as items, a row of correction value 1001 in addition to the variables for the respective teaching points. Value item 1020 indicates the difference value between the teaching point before correction (teaching point 710 in Fig. 7) and the teaching point after correction (teaching point 710' in Fig. 7). Device 100 can reflect the correction of the teaching points in program 1000 by adding, to program 1000, a code for adding or subtracting the value of value item 1020 to and from each teaching point (teaching point 710 in Fig. 7).

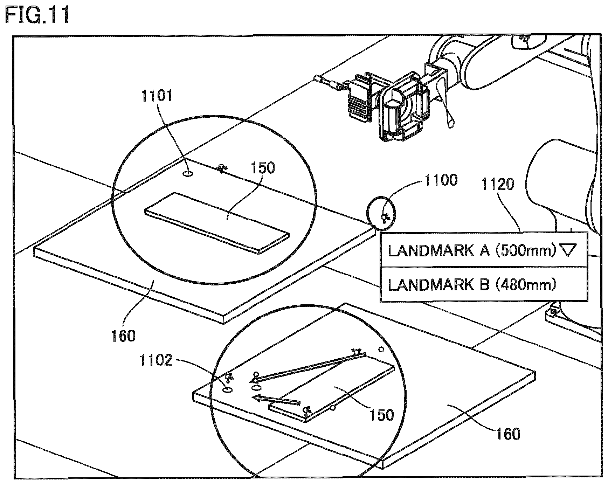

Fig. 11 shows a second example of the display of landmark 120 and information for correcting teaching points by software 110. In the example of Fig. 11, a teaching point 1100, a landmark A_1101, and a landmark B_1102 are displayed on the screen. Thus, when the distances from one teaching point to the landmarks are comparable to each other, software 110 may display, on the screen, a selection item 1120 for selecting a landmark that serves as a reference for correcting a teaching point. In the example of Fig. 11, the user can select either of landmark A_1101 or landmark B_1102 as a landmark that serves as a reference for correction of teaching point 1100 via selection item 1120. Device 100 (software 110) extracts the amount of deviation (difference) in the position of workpiece 150 based on the selected landmark 120. Device 100 then corrects the teaching points based on the extracted amount of deviation (difference) in the position of workpiece 150. In other words, selection item 1120 is a selection item for selecting a landmark that serves as a reference for extracting the amount of deviation (difference) of workpiece 150.

For example, the user may select landmark B_1102 based on the fact that teaching point 1100 is closer to landmark B_1102 than to landmark A_1101. The user may also select landmark A_1101 based on the fact that teaching point 1100 is associated with an operation for picking workpiece 150 on base 160 on which landmark A_1101 is placed. In this manner, the user may select a landmark that serves as a reference for correcting the teaching point based on distance and any other factor, as appropriate.

Selection item 1120 may be configured to select any of an arbitrary number of, three or more, landmarks. Device 100 calculates a correction value of teaching point 1100 with respect to the selected landmark, and further, generates and outputs a program reflecting the correction of teaching point 1100 and its parameters.

### <E. Flowchart>

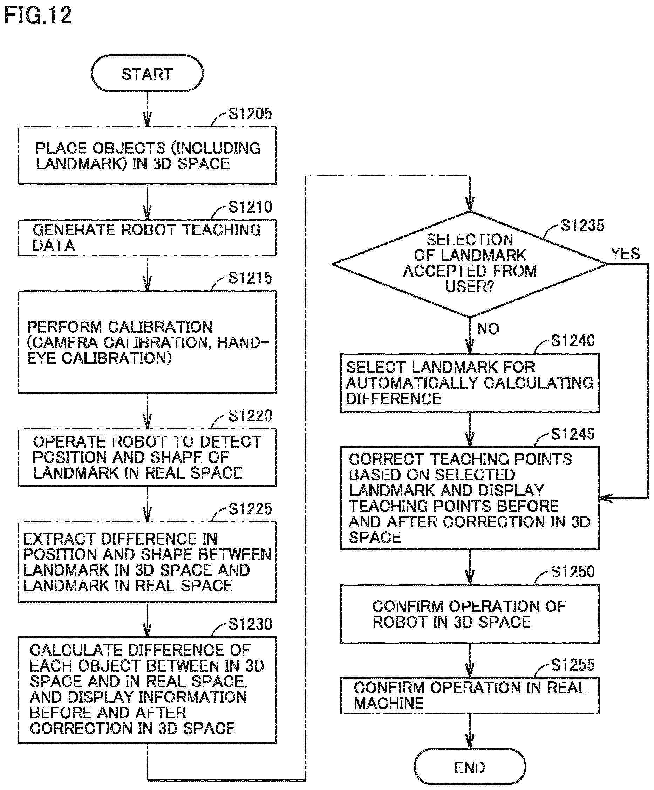

Fig. 12 is a flowchart showing an example procedure of the teaching data correction process by software 110 using device 100. Although the procedure for correcting teaching data by device 100 will be described by way of example in the following description, in an aspect, software 110 may be installed in any of PC 210, PLC 220, and IPC 230. In this case, PC 210, PLC 220, or IPC 230 with software 110 installed may operate as device 100. If necessary, the respective modules of software 110 may be distributed among PC 210, PLC 220, and IPC 230. In this case, PC 210, PLC 220, and IPC 230 cooperate to implement the process shown in Fig. 12. Further, in another aspect, part or all of the process may also be implemented as a combination of circuit elements configured to perform the process.

PC 210 or IPC 230, which can operate as device 100, may perform part or all of software 110 by loading part or all of software 110 from secondary storage device 3 to primary storage device 2 in order to perform part or all of the process shown in Fig. 12. Similarly, in order to perform part or all of the process shown in Fig. 12, PLC 220 (CPU 501) may perform part or all of the process shown in Fig. 12 by loading part or all of software 110 from secondary storage device 503 to primary storage device 502.

In step S1205, device 100 places objects in the 3D space based on a user's operation via UI 601. In other words, device 100 constructs an environment (virtual line) necessary for generating teaching data for robot 130.

In step S1210, device 100 generates teaching data for robot 130 based on a user's operation via UI 601. The teaching data to be generated includes one or more teaching points. In this step, device 100 stores the position of landmark 120 and the position of each teaching point in the 3D space.

In step S1215, device 100 performs calibration in the real space. The calibration includes a camera calibration for adjusting the distance (imaging distance) between camera 135 and landmark 120 and a hand-eye calibration to adjust the orientation of robot 130 for moving camera 135 attached to the tip of robot 130 to the imaging distance. In an aspect, PLC 220 and IPC 230 may cooperate to control robot 130 and camera 135 when performing processing of this step. In another aspect, IPC 230 may control robot 130 and camera 135 during execution of processing of this step.

In step S1220, device 100 operates robot 130 to detect the position and shape of landmark 120 in the real space. In this step, device 100 may calculate the positions (positions in robot coordinates) of workpiece 150, base 160, and the like in the real space, based on the information on the position and shape of the detected landmark 120. In an aspect, PLC 220 and IPC 230 may cooperate to control robot 130 and camera 135 during the execution of processing of this step. In another aspect, IPC 230 may control robot 130 and camera 135 during the execution of processing of this step.

In step S1225, device 100 extracts a difference in position and shape between landmark 120 in the 3D space and landmark 120 in the real space. In an aspect, PC 210 may perform processing of this step based on an image obtained from IPC 230. In another aspect, IPC 230 may perform processing of this step based on an image obtained from camera 135.

In step S1230, device 100 calculates a difference of each object (including landmark 120, workpiece 150, and the like) between in the 3D space and in the real space, and displays the information before and after correction in the 3D space. Device 100 may also display, for example, a vector indicating a difference between objects before and after correction in the 3D space.

In step S1235, device 100 determines whether it has accepted the selection of landmark 120 from the user. Processing of this step corresponds to the operation of selecting landmark A_1101 or landmark B_1102 in Fig. 11. Device 100 (software 110) extracts the amount of deviation (difference) in the position of workpiece 150 based on the selected landmark 120. Device 100 then corrects the teaching point based on the extracted amount of deviation (difference) in the position of workpiece 150. Thus, it can be said that landmark 120 selected in this step is a reference for extracting the amount of deviation (difference) of workpiece 150 or a landmark that serves as a reference for correcting the teaching point. In an aspect, when there is only one landmark 120 in the vicinity of the teaching point from which a difference is to be extracted, device 100 may perform processing of step S1240 without performing processing of step S1235.

When determining that it has accepted the selection of landmark 120 from the user (YES in step S1235), device 100 moves control to step S1245. Otherwise (NO in step S1235), device 100 moves control to step S1240.

In step S1240, device 100 automatically selects a landmark for calculating a difference (between teaching points). By way of example, device 100 may select a nearest neighbor landmark 120 to workpiece 150, for which the amount of deviation (difference) in teaching point or position of a correction target is extracted.

In step S1245, device 100 corrects the teaching point based on the selected landmark 120 and displays the teaching points before and after correction in the 3D space. More specifically, device 100 extracts the amount of deviation (difference) in the position of workpiece 150 based on the selected landmark 120 (based on the position of the nearest neighbor landmark 120 in the 3D space and the position of nearest neighbor landmark 120 in the real space). Device 100 then corrects the teaching point based on the extracted amount of deviation (difference) in the position of workpiece 150. In an example described referring to Fig. 7, the teaching points before and after correction are teaching point 710 and teaching point 710'.

In an aspect, the process from step S1235 to step S1245 may be performed repeatedly. For example, when the user selects a landmark 120 that serves as a reference for correction of each of a plurality of teaching points, device 100 repeatedly performs the process from step S1235 to step S1245 as many times as the user has selected landmark 120.

In step S1250, device 100 confirms the operation of robot 130 in the 3D space. More specifically, device 100 generates a program reflecting the correction of the teaching data. Further, device 100 uses the program to operate robot 130 in the 3D space. In an aspect, PC 210 or IPC 230 may perform the process from step S1225 to step S1250.

In step S1255, device 100 confirms the operation of robot 130 in the real space. More specifically, device 100 operates robot 130 in the real space according to a program reflecting the correction of the teaching data. In an aspect, the program with the teaching data reflected by PC 210 or IPC 230 may be installed on PLC 220. In this case, the program with the teaching data reflected by PLC 220 is used to operate robot 130. In another aspect, robot 130 may be operated using the program with the teaching data reflected by IPC 230.

As described above, device 100 and systems 200 to 400 according to the present embodiment can visually display, in the 3D space, deviations of landmark 120 and workpiece 150 between in the 3D space and in the real space. This allows the user to confirm the positional deviation (deviation in position and orientation) of landmark 120 and workpiece 150 caused by a line distortion or the like in the real space.

Device 100 and systems 200 to 400 can also correct the teaching data of robot 130 based on the positional deviation of landmark 120 and workpiece 150 between in the 3D space and in the real space. This allows device 100 and systems 200 to 400 to significantly reduce the man-hour required for on-site adjustment work, which is necessary when robot 130 is operated on a line constructed in the real space.

### <F. Additional Aspects>

As described above, the present embodiment includes the following disclosure.

### [Configuration 1]

A device (100) for teaching a robot (130), the device (100) including:
a teaching point generation unit (622) for generating a teaching point for the robot (130) in a 3D space;
a landmark recognition unit (605) for recognizing a landmark placed in each of the 3D space and a real space;
a difference extraction unit (608) that extracts a difference between a position and an orientation of a workpiece (150) in the 3D space and a position and an orientation of the workpiece (150) in the real space based on a position and an orientation of the landmark (120) placed in the 3D space and a position and an orientation of the landmark (120) placed in the real space; and
a correction unit (610) that corrects the teaching point based on the difference.

### [Configuration 2]

The device (100) according to configuration 1, wherein
the landmark (120) includes a plurality of landmarks (120), and
extracting the difference between the position and the orientation of the workpiece (150) in the 3D space and the position and the orientation of the workpiece (150) in the real space includes
   selecting a nearest neighbor landmark (120) to the workpiece (150) from among the plurality of landmarks (120), and
   extracting the difference between the position and the orientation of the workpiece (150) in the 3D space and the position and the orientation of the workpiece (150) in the real space based on a position and an orientation of the nearest neighbor landmark (120) in the 3D space and a position and an orientation of the nearest neighbor landmark (120) in the real space.

### [Configuration 3]

The device (100) according to configuration 1 or 2, further comprising a user interface for displaying the 3D space,
wherein the user interface displays in the 3D space
the landmark (120) placed in the 3D space, the workpiece (150), and the teaching point before correction, and
the landmark (120), the workpiece (150), and the teaching point after correction detected in the real space.

### [Configuration 4]

The device (100) according to configuration 3, wherein
the landmark (120) includes a plurality of landmarks (120),
the user interface is configured to
   display the plurality of landmarks (120) in the 3D space, and
   select a landmark (120) used for extracting the difference in the position and the orientation of the workpiece (150) from among the plurality of landmarks (120), and
   extracting the difference between the position and the orientation of the workpiece (150) in the 3D space and the position and the orientation of the workpiece (150) in the real space includes extracting a difference between the position and the orientation of the workpiece (150) in the 3D space and the position and the orientation of the workpiece (150) in the real space based on a position and an orientation of the selected landmark (120) in the 3D space and a position and an orientation of the selected landmark (120) in the real space.

### [Configuration 5]

The device (100) according to any one of configurations 1 to 4, wherein
the robot (130) operates according to a program including a variable for storing the teaching point, and
the correction unit (610) rewrites a value of the teaching point stored in the variable.

### [Configuration 6]

The device (100) according to any one of configurations 1 to 5, wherein
the robot (130) operates according to a program including a variable for storing the teaching point, and
the correction unit (610)
   generates another variable for storing a correction value of the teaching point, and
   generates a code for adding or subtracting a value of the correction value stored in the other variable to and from a value of the teaching point stored in the variable.

### [Configuration 7]

A method for teaching a robot (130) by a computer, the method comprising:
generating a teaching point for the robot (130) in a 3D space;
recognizing a landmark (120) placed in each of the 3D space and a real space;
extracting a difference between a position and an orientation of a workpiece (150) in the 3D space and a position and an orientation of the workpiece (150) in the real space based on a position and an orientation of the landmark (120) placed in the 3D space and a position and an orientation of the landmark (120) placed in the real space; and
correcting the teaching point based on the difference.

### [Configuration 8]

A program for causing a computer to teach a robot (130), the program causing the computer to perform:
generating a teaching point for the robot (130) in a 3D space;
recognizing a landmark (120) placed in each of the 3D space and a real space;
extracting a difference between a position and an orientation of a workpiece (150) in the 3D space and a position and an orientation of the workpiece (150) in the real space based on a position and an orientation of the landmark (120) placed in the 3D space and a position and an orientation of the landmark (120) placed in the real space; and
correcting the teaching point based on the difference.

It should be understood that the embodiment disclosed herein is illustrative and non-restrictive in every respect. The scope of the present disclosure is defined by the terms of the claims rather than the description above and is intended to include any modifications within the scope and meaning equivalent to the terms of the claims. Contents of the disclosure described in the embodiment and each modification are intended to be carried out alone or in combination whenever possible.

### REFERENCE SIGNS LIST

1, 501 CPU; 2, 502 primary storage device; 3, 503 secondary storage device; 4 external device interface; 5 input interface; 6 output interface; 7, 507 communication interface; 100 device; 110 software; 120 landmark; 130 robot; 135 camera; 150 workpiece; 160 base; 200, 300, 400 system; 250 handheld camera; 260 stationary camera; 505 IO interface; 602 teaching unit; 603 calibration unit; 604 imaging unit; 605 landmark recognition unit; 606 3D-space positional information acquisition unit; 607 real-space positional information acquisition unit; 608 difference extraction unit; 609 position correction unit; 610 teaching point correction unit; 611 output unit; 621 placement unit; 622 teaching point generation unit; 700 screen; 710, 1100 teaching point; 800 teaching data; 811 location name item; 812 data type item; 813, 920, 1020 value item; 814 robot name item; 815 display mode item; 900, 1000 program; 910 variable name item; 950, 1050 parameter; 1001 correction value; 1101 landmark A; 1102 landmark B; 1120 selection item.

## Claims

1. A device for teaching a robot, the device comprising:
a teaching point generation unit for generating a teaching point for the robot in a three-dimensional (3D) space;
a landmark recognition unit for recognizing a landmark placed in each of the 3D space and a real space;
a difference extraction unit that extracts a difference between a position and an orientation of a workpiece in the 3D space and a position and an orientation of the workpiece in the real space based on a position and an orientation of the landmark placed in the 3D space and a position and an orientation of the landmark placed in the real space; and
a correction unit that corrects the teaching point based on the difference.

2. The device according to claim 1, wherein
the landmark includes a plurality of landmarks, and
extracting the difference between the position and the orientation of the workpiece in the 3D space and the position and the orientation of the workpiece in the real space includes
selecting a nearest neighbor landmark to the workpiece from among the plurality of landmarks, and
extracting the difference between the position and the orientation of the workpiece in the 3D space and the position and the orientation of the workpiece in the real space based on a position and an orientation of the nearest neighbor landmark in the 3D space and a position and an orientation of the nearest neighbor landmark in the real space.

3. The device according to claim 1 or 2, further comprising a user interface for displaying the 3D space,
wherein the user interface displays in the 3D space
the landmark, the workpiece, and the teaching point before correction placed in the 3D space, and
the landmark, the workpiece, and the teaching point after correction detected in the real space.

4. The device according to claim 3, wherein
the landmark includes a plurality of landmarks,
the user interface is configured to
display the plurality of landmarks in the 3D space, and
select a landmark used for extracting the difference in the position and the orientation of the workpiece from among the plurality of landmarks, and
extracting the difference between the position and the orientation of the workpiece in the 3D space and the position and the orientation of the workpiece in the real space includes extracting a difference between the position and the orientation of the workpiece in the 3D space and the position and the orientation of the workpiece in the real space based on a position and an orientation of the selected landmark in the 3D space and a position and an orientation of the selected landmark in the real space.

5. The device according to claim 1 or 2, wherein
the robot operates according to a program including a variable for storing the teaching point, and
the correction unit rewrites a value of the teaching point stored in the variable.

6. The device according to claim 1 or 2, wherein
the robot operates according to a program including a variable for storing the teaching point, and
the correction unit
generates another variable for storing a correction value of the teaching point, and
generates a code for adding or subtracting a value of the correction value stored in the other variable to and from a value of the teaching point stored in the variable.

7. A method for teaching a robot by a computer, the method comprising:
generating a teaching point for the robot in a 3D space;
recognizing a landmark placed in each of the 3D space and a real space;
extracting a difference between a position and an orientation of a workpiece in the 3D space and a position and an orientation of the workpiece in the real space based on a position and an orientation of the landmark placed in the 3D space and a position and an orientation of the landmark placed in the real space; and
correcting the teaching point based on the difference.

8. A program for causing a computer to teach a robot, the program causing the computer to perform:
generating a teaching point for the robot in a 3D space;
recognizing a landmark placed in each of the 3D space and a real space;
extracting a difference between a position and an orientation of a workpiece in the 3D space and a position and an orientation of the workpiece in the real space based on a position and an orientation of the landmark placed in the 3D space and a position and an orientation of the landmark placed in the real space; and
correcting the teaching point based on the difference.
